# EUROPEAN PATENT APPLICATION

(11) **EP 2 068 177 A1**
(43) Date of publication of application: **10.06.2009**
(21) Application number: 08020875.4
(22) Date of filing: 02.12.2008
(51) Int. Cl.: G02B 1/04, C08K 3/36

(54) **Optical material, optical element, and method for making optical element**

(30) Priority: 04.12.2007 JP 2007314012
(71) Applicant: Canon Kabushiki Kaisha, Ohta-ku Tokyo (JP)
(72) Inventor: Kumagai, Takeaki, Tokyo (JP)
(74) Representative: Weser, Thilo

(57) **Abstract**

An optical material (11) includes a silsesquioxane compound having a polymerizable functional site, and silica fine particles. The total content of the silsesquioxane compound and the silica fine particles in the optical material (11) is 95 percent by weight or more, and the average particle diameter of the silica fine particles is 1 nm or more and 100 nm or less.

## Description

### BACKGROUND OF THE INVENTION

### Field of the Invention

The present invention generally relates to transparent optical materials applicable to lenses, filters, optical fibers, mirrors, refractive optical elements, diffractive optical elements, etc. In particular, the present invention may relate to an organic-inorganic hybrid material.

### Description of the Related Art

Transparent resin materials are applied to optical materials such as optical fibers and optical lenses, and used in a wide variety of areas. Representative examples of transparent resin materials that are currently available include methyl polymethacrylates, polycarbonates, polystyrenes, and cyclic polyolefins.

However, these resin materials typically have a low mechanical property and a high thermal expansion coefficient compared to glass materials. The high thermal expansion coefficient means that the change in refractive index with temperature changes is significant if these materials are used to produce optical components such as lenses. Thus, it has been difficult to use the resin materials as bulk materials, and the use of the resin materials has thus been limited to only certain fields.

In general, it may be effective to increase the inorganic component content in the resin material in order to improve the mechanical property and decrease the thermal expansion coefficient of the resin material. United States Patent No. 7,075,728 describes addition of a filler, such as inorganic fine particles, to a resin to increase the inorganic component content in the material.

United States Patent No. 6,103,854 describes a polymer material containing an inorganic component, the skeleton of which is directly connected to the skeleton of an organic component.

However, in adding and dispersing an inorganic filler into a transparent resin material, scattering may occur due to the difference in refractive index between the resin material and the inorganic filler, which may degrade the transparency of the material as a whole. Scattering may be even more apt to occur as the difference in refractive index between the resin material and the inorganic filler widens. In general, the refractive index of an inorganic material is higher than that of a resin material. In particular, inorganic fillers such as zirconium oxide and titanium oxide have a refractive index largely exceeding 2. Since the refractive index of representative transparent resin materials such as polyacryl, polycarbonate, and polycycloolefin materials is about 1.5 to about 1.6, the scattering caused by the difference in refractive index increases. In order to suppress scattering caused by the difference in refractive index, it may be desirable to decrease the difference in refractive index between the resin material and the inorganic filler, and thus such combinations of resin material and inorganic filler that provide a decreased difference in refractive indices may be considered.

Moreover, scattering is more apt to occur as the particle diameter increases. Since scattering shows a factorial increase with increasing particle diameter, it may be effective to decrease the particle diameter to suppress the scattering. On the other hand, the particle diameter of the fine particles added may also be relatively large to increase the inorganic filler concentration in the resin material. Thus, it has been difficult to both suppress the scattering and simultaneously increase the inorganic component content.

Also, inorganic materials having absorptions in the visible region can cause coloration if an excessive amount is added to the resin material. Accordingly, due to scattering and coloration, it has been difficult to add an inorganic filler in an amount sufficient for improving the mechanical property and the thermal expansion coefficient of the resin material according to existing technologies.

Organic-inorganic hybrid materials, in which an organic component is directly connected to an inorganic component, are being used to increase the inorganic component content in the material and improve the mechanical property and thermal resistance of the material. A variety of organic-inorganic hybrid materials have been proposed to date. Also, in order to improve the mechanical property and decrease the thermal expansion coefficient, the inorganic component content may be increased.

One approach to increasing the inorganic component content is to add inorganic fine particles to an organic-inorganic hybrid material. Japanese Patent Laid-Open No. 2005-331708 describes addition of tantalum oxide to a silsesquioxane compound, i.e., an organic-inorganic hybrid material. However, the refractive index of tantalum oxide is as high as about 2.1. Thus, coloration and scattering caused by the difference in refractive index between the silsesquioxane compound and tantalum oxide may still remain.

### SUMMARY OF THE INVENTION

The present invention provides an optical material which is transparent and substantially free of scattering or coloration and has a high mechanical property and a low thermal expansion coefficient. An optical element incorporating the optical material and a method for making the optical element are also provided.

The present invention in its first aspect provides an optical material as specified in claims 1 to 4.

The present invention in its second aspect provides an optical element as specified in claim 5.

The present invention in its third aspect provides a method for making an optical element as specified in claim 6.

Further features of the present invention will become apparent from the following description of exemplary embodiments with reference to the attached drawings.

### BRIEF DESCRIPTION OF THE DRAWINGS

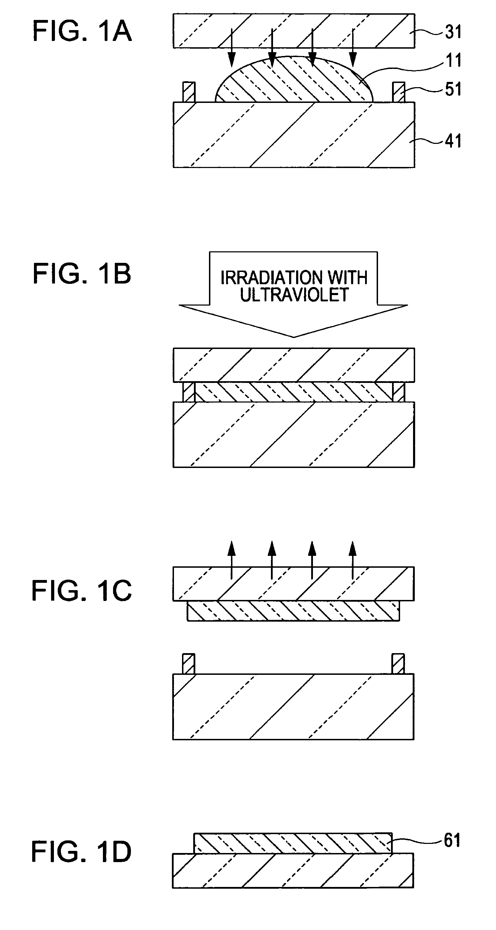

Figs. 1A to 1D are diagrams illustrating an embodiment of a molding process for an optical element.

### DESCRIPTION OF THE EMBODIMENTS

Embodiments of the present invention will now be described in detail.

According to one embodiment in accordance with the present invention, an optical material is provided that has a sufficient transparency while achieving an increased mechanical property and a decreased thermal expansion coefficient, by adding and dispersing silica fine particles into a silsesquioxane compound having a polymerizable functional site.

The silsesquioxane compound is an organic-inorganic hybrid material having an organic skeleton including a polymerizable functional site, and an inorganic skeleton including a silsesquioxane structure whose main skeleton is SiO_{3/2}. In the embodiments described below, the silsesquioxane compound is used as the base material and silica fine particles are added as an inorganic filler to increase the inorganic component ratio of the material as a whole.

The silsesquioxane compound having a polymerizable functional site can be a compound represented by general formula (1) below: 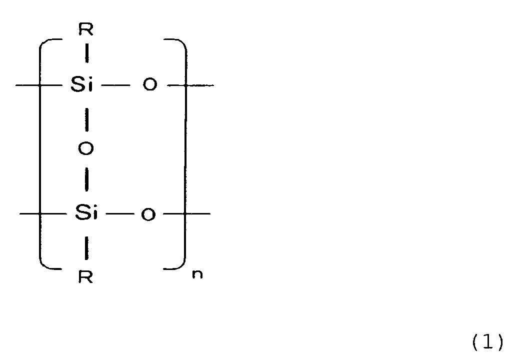 where R represents a polymerizable functional group and n represents a natural number.

In general formula (1), R representing a polymerizable functional group may be, but is not limited to, a vinyl-, acryl-, methacryl-, or epoxy-containing functional group. Polymerizable functional groups such as acryl and methacryl have a refractive index close to that of silica fine particles and thus are particularly advantageous for suppressing scattering caused by the difference in refractive index. In one version, the polymerizable functional site of the silsesquioxane compound includes a group R selected from the group consisting of acryl, methacryl, vinyl, and epoxy.

In general formula (1), n representing a natural number can be an integer of 3 or greater. In one version, the silsesquioxane compound can be synthesized by hydrolysis of a trifunctional alkoxysilane. In this version, the polymerizable functional group R in the silsesquioxane compound may be determined by the choice of the trifunctional alkoxysilane. For example, in the case where an acrylic trifunctional alkoxysilane is used, a silsesquioxane compound having an acrylic site in R can be synthesized.

Examples of trifunctional alkoxysilane having a polymerizable functional site may include, but are not limited to, 3-methacryloxypropyltrimethoxysilane, 3-methacryloxypropyltriethoxysilane, 3-methacryloxypropyltriisopropoxysilane, methacryloxymethyltrimethoxysilane, 3-acryloxypropyltrimethoxysilane, vinyltrimethoxysilane, vinyltriethoxysilane, butenyltrimethoxysilane, butenyltriethoxysilane, hexenyltriethoxysilane, 7-octenyltrimethoxysilane, 7-octenyltriethoxysilane, 10-undecenyltrimethoxysilane, 3-glycidoxypropyltrimethoxysilane, 3-glycidoxypropyltriethoxysilane, 5,6-epoxyhexyltriethoxysilane, allyltrimethoxysilane, allyltriethoxysilane, and allyloxyundecenyltrimethoxysilane.

In one embodiment, since silica fine particles are to be dispersed in the silsesquioxane compound, the silsesquioxane compound may be liquid at normal temperature. The silsesquioxane compound may also sometimes be solid at normal temperature, depending on the type and synthetic conditions of the polymerizable functional group R of the silsesquioxane compound.

According to one version, the silica fine particles are a colorless, transparent inorganic filler having a siloxane structure that is the similar or even identical to the silsesquioxane structure. Since the silica fine particles and the silsesquioxane compound have the same or similar structure, the difference in refractive index is relatively small. Thus, coloration and scattering caused by the material can be suppressed by using the silica fine particles, such as those having a diameter less than 10 nm.

In one embodiment, the surfaces of the silica fine particles may also be modified to increase the dispersibility in the silsesquioxane compound. For example, silica fine particles having surfaces modified with methacryloxypropyl groups may exhibit improved dispersibility in a silsesquioxane compound containing a methacryloxypropyl group as the R group. It may be advisable to exercise caution since silica fine particles may not disperse in a silsesquioxane compound depending on the types of surface-modifying groups of the silica fine particles and the R group of the silsesquioxane compound.

The inorganic filler ratio can also be increased by increasing the diameter of the silica fine particles; however, the increase in diameter may also increase scattering and degrade transparency. On the other hand, since the diameter of the siloxane structure in the silsesquioxane compound represented by general formula (1) is generally about 0.5 nm at the minimum, silica fine particles having a diameter larger than this may be added to increase the inorganic filling ratio. Thus, in one version, the diameter of silica fine particles to be added may be 1 nm or more and 100 nm or less. For example, to reduce scattering, the diameter of the silica fine particles added may be 1 nm or more and 50 nm or less.

The total content of the silsesquioxane compound and the silica fine particles in the optical material can be 95 percent by weight or more, or even 98 percent by weight or more. Furthermore, the ratio of the silsesquioxane compound content A to the silica fine particle content B (A/B) can be in the range of 20/80 to 80/20.

In one embodiment, in order to disperse the silica fine particles in the silsesquioxane compound without causing excessive aggregation, a dispersion solution of the silica fine particles in a dispersion medium can be used. Aspects of this method may be well-suited for handling ease. In one version, a material having good compatibility with the silsesquioxane compound may be selected as the dispersion medium of the dispersion solution. In another version, to improve the property of the molded product, the dispersion solution may contain as little dispersant as possible.

The silsesquioxane compound containing the polymerizable functional group may be mixed with the dispersion solution containing the silica fine particles. In the event the silica fine particles are difficult to disperse, a dispersion machine such as a ultrasonic homogenizer or bead mill may be used. The dispersion solution of the silica fine particles may be thoroughly mixed with the silsesquioxane compound, and may be subjected to vacuum suction under stirring so as to remove the solvent. As a result, a transparent material containing dispersed silica fine particles can be obtained. Depending on the mixing conditions, transparency may in certain cases be degraded after removal of the solvent. Thus, the mixing ratio, diameter of fine particles, fine particle concentration, inorganic component content in the silsesquioxane compound, and type of the polymerizable functional group R may be adjusted appropriately.

In one embodiment, a curing agent or photoinitiator adequate for the polymerizable functional site and the curing process is added to cure the silica fine particle-dispersed transparent material. For example, in a version where a photopolymerization reaction is conducted using double bonds of methacryloxypropyl groups, a photoinitiator may added and the material may be irradiated with light having a particular wavelength to cure the material. The photoinitiator may be added before or after removal of the solvent from the dispersion solution of the silica fine particles. However, since the transparent material containing dispersed silica fine particles tends to exhibit high viscosity after removal of the solvent, in one version the photoinitiator can be added before removal of the solvent to achieve higher material homogeneity. The amount of the photoinitiator may be, for example, less than 5 parts by weight and even 2 parts by weight or less per 100 parts by weight of the transparent material containing dispersed silica fine particles, to reduce or even prevent coloration and degradation in transparency. It may also be possible, for example to select an epoxy group as the polymerizable functional group R of the silsesquioxane compound, so that polymerization can be performed by ring-opening of the epoxy group with an amine curing agent. In this case, since the curing agent may be added after removal of the solvent, it may be advisable to take care to prevent entry of air bubbles into the material.

An optical element according to one embodiment comprises the optical material described above. Examples of the optical element include lenses, refractive optical elements, and diffractive optical elements. A method for making an optical element according to one embodiment includes filling a gap between a mold and a glass plate with the optical material, curing the optical material to make the optical material integral with the glass plate, and then removing the integrated optical material and glass plate from the mold.

In one version, the optical material may be made to fill the gap between the mold and the glass plate by first applying the optical material on the mold and then spreading out the optical material by pressing with the glass plate.

### EXAMPLES

The present invention will now be described by way of Examples.

### Example 1

Example 1 involves a silsesquioxane compound having methacryl at the polymerizable functional site.

### Synthesis of Base Material

To 668 parts by weight of methanol, 125 parts by weight of 3-methacryloxypropyltrimethoxysilane (Sila-Ace S710 produced by Chisso Corporation) was added and then 10 parts by weight of an aqueous ammonium solution (4.1 wt%) was added dropwise, followed by stirring. After about 1 day of stirring, a silsesquioxane compound containing a methacryloxypropyl group as the polymerizable functional group R was synthesized in the presence of methanol. Methanol was removed with an evaporator to extract only the silsesquioxane compound and the extracted silsesquioxane compound was thoroughly vacuumed with a rotary pump.

### Mixing of Silica Fine Particles

To 80 parts by weight of a 5 wt% methanol dispersion solution of unmodified silica fine particles, 20 parts by the weight of 3-methacryloxypropyltrimethoxysilane was added dropwise, followed by stirring. After about 1 day of stirring, surface-modified silica fine particles are synthesized, and the diameter of particles measured by dynamic light scattering was 14 nm in terms of number-average distribution. To 100 parts by weight of methanol dispersion solution of the surface-modified silica fine particles, 10 parts by weight of the silsesquioxane compound containing the methacryloxypropyl group prepared as above was mixed and the resulting mixture was thoroughly stirred. A photoinitiator (Irgacure 184 produced by Ciba Specialty Chemicals Inc.) was added thereto at a concentration of 2 percent by weight relative to 10 parts by weight of the silsesquioxane compound, i.e., the base material. Then methanol was removed with an evaporator to obtain a transparent material containing dispersed silica fine particles.

### Molding

As shown in Fig. 1A, the transparent material containing dispersed silica fine particles was applied on a glass plate 41. Another glass plate 31 was superimposed to retain the transparent material between the two opposing plates while a spacer 51 having a thickness of 0.5 mm was interposed between the two glass plates so as to adjust the thickness of a silica fine particle-dispersed material 11. Referring to Fig. 1B, one of the glass plates, i.e., the glass plate 31, was preliminarily subjected to silane coupling treatment after corona discharge treatment so that the glass plate 31 could sufficiently adhere onto the silica fine particle-dispersed transparent material.

The silane coupling treatment was conducted by applying 3-methacryloxypropyltrimethoxysilane, i.e., a silane coupling agent, on glass and drying at 80°C for 60 minutes. The silica fine particle-dispersed transparent material interposed between the glass plates was irradiated with light from a high-pressure mercury lamp (EX250 produced by Hoya Candeo Optronics) to be cured. Subsequently, as shown in Fig. 1C, the glass plate 41 not subjected to silane coupling treatment was detached to obtain an optical element including the glass plate 41 and a flat transparent film 61 having a thickness of 0.5 mm disposed on the glass plate 41, as shown in Fig. 1D.

### Example 2

Example 2 involves a silsesquioxane compound having vinyl at the polymerizable functional site.

### Synthesis of Base Material

The base material was synthesized by the same procedure as in Example 1 but with 27 parts by weight of 10-undecenyltrimethoxysilane (produced by Gelest Inc.) instead of 30 parts by weight of 3-methacryloxypropyltrimethoxysilane in Example 1.

### Mixing of Silica Fine Particles

Into 80 parts by weight of an acetone dispersion solution (8 wt%) of silica fine particles, 10 parts by weight of a silsesquioxane compound synthesized by using 10-undecenyltrimethoxysilane was mixed, and the resulting mixture was thoroughly stirred. The surfaces of the silica fine particles had been surface-modified with 10-undecenyltrimethoxysilane so that the particles could satisfactorily disperse in acetone. The diameter of silica fine particles measured by dynamic light scattering was 14 nm in terms of number-average distribution. To the resulting mixture, a photoinitiator (Irgacure 184 produced by Ciba Specialty Chemicals Inc.) was added so that its concentration was 2 percent by weight of the weight of the silsesquioxane compound, i.e., the base material. Then acetone was removed with an evaporator to obtain a silica fine particle-dispersed transparent material.

### Molding

An optical element was produced by molding as in Example 1.

### Comparative Example 1

The silsesquioxane compound synthesized in Example 1 and having a methacryloxypropyl group as the polymerizable functional group R was molded without adding any silica fine particles to obtain a transparent film.
The molding method was the same as in Example 1.

Table 1 shows evaluation results of the hardness, thermal expansion coefficient, and transmittance of the transparent films prepared in Examples 1 and 2 and Comparative Example 1.

### Hardness

Hardness was measured with a nanoindenter and evaluated according to the following criteria:
Good: Hardness was 0.5 GPa or higher
Poor: Hardness was less than 0.5 GPa

### Thermal Expansion Coefficient

Thermal expansion coefficient was measured with a thermomechanical analyzer (TMA), TA5000 produced by TA Instruments by a penetration method and evaluated according to the following criteria:
Good: Thermal expansion coefficient was less than 100 × 10⁻⁶/°C
Poor: Thermal expansion coefficient was 100 × 10⁻⁶/°C or higher

### Transmittance

Transmittance was measured with a spectrophotometer (U4000 produced by Hitachi Ltd.) and evaluated according to the following criterion:
Good: Transmittance was 85% or higher at a wavelength of 400 nm.

**Table 1**

| | Hardness | Thermal expansion coefficient | Transmittance |
|---|---|---|---|
| Example 1 | Good | Good | Good |
| Example 2 | Good | Good | Good |
| Comparative Example 1 | Poor | Poor | Good |

The results in Table 1 show that the transparent films of Examples 1 and 2 which are within the scope of the invention exhibit an increase in hardness and a decrease in thermal expansion coefficient when compared with the transparent film of Comparative Example 1. The transmittance of Examples 1 and 2 is also satisfactory.

According to the above examples, an optical material containing silica fine particles and a silsesquioxane compound having a polymerizable functional site in accordance with the invention can thus be used to produce an optical element which is transparent and substantially free of scattering or coloration and has a high mechanical property and a low thermal expansion coefficient.

In the examples, the silsesquioxane compound, which is an organic-inorganic hybrid material, is used as a base material, and silica fine particles, i.e., an inorganic filler, are added to the base material. In exemplary versions where the structures of the base material and the fine particles are the same or similar, the base material and the fine particles may have substantially the same refractive index. Thus, scattering caused by fine particles can be reduced and a resin material with high transparency can be obtained.

Moreover, in exemplary versions where silica fine particles having a diameter larger than that of the siloxane structure present in the silsesquioxane compound are added, a larger amount of inorganic component can be incorporated in the transparent material. As a result, a resin material that has a low thermal expansion coefficient and excellent mechanical properties can be obtained.

While the present invention has been described with reference to exemplary embodiments, it is to be understood that the invention is not limited to the exemplary embodiments disclosed herein. The scope of the following claims is to be accorded the broadest interpretation so as to encompass all modifications and equivalent structures and functions.

## Claims

1. An optical material (11) comprising:
a silsesquioxane compound having a polymerizable functional site; and
silica fine particles,
wherein the total content of the silsesquioxane compound and the silica fine particles in the optical material (11) is 95 percent by weight or more, and the average particle diameter of the silica fine particles is 1 nm or more and 100 nm or less.

2. The optical material (11) according to claim 1,
wherein the polymerizable functional site includes a group selected from the group consisting of acryl, methacryl, vinyl, and epoxy.

3. The optical material (11) according to claim 1,
wherein surfaces of the silica fine particles are modified.

4. The optical material (11) according to claim 1,
wherein the silica fine particles have a siloxane structure that is the same as that of the silsesquioxane compound.

5. An optical element comprising:
a glass substrate (31); and
a transparent film (61) integral with the glass substrate (31), the transparent film (61) being formed by curing the optical material (11) set forth in claim 1.

6. A method for making an optical element, comprising:
filling a gap between a mold (41) and a glass plate with the optical material (11) of claim 1,
curing the optical material (11) so that the optical material (11) is integral with the glass plate; and
removing the integrated optical material (11) and glass plate from the mold (41).
